# EUROPEAN PATENT SPECIFICATION

(11) **EP 3 196 216 B1**
(45) Date of publication and mention of the grant of the patent: **19.12.2018**
(21) Application number: 16207233.4
(22) Date of filing: 29.12.2016
(51) Int. Cl.: C08F 6/28

(54) **METHOD OF REMOVING BLEEDING COMPONENT AND/OR BLOOMING COMPONENT**
VERFAHREN ZUR ENTFERNUNG EINER BLUTENDEN KOMPONENTE UND/ODER AUSBLÜHENDEN KOMPONENTE
PROCÉDÉ D'ÉLIMINATION DE COMPOSANT DE PURGE ET/OU COMPOSANT DE COLMATAGE

(30) Priority: 22.01.2016 JP 2016010934
(43) Date of publication of application: 26.07.2017
(73) Proprietor: Sumitomo Rubber Industries, Ltd., Kobe-shi, Hyogo 651-0072 (JP)
(72) Inventor: FURUKAWA, Tsuyoshi, Kobe-shi Hyogo 651-0072 (JP)
(74) Representative: TBK

(56) References cited:
- JP-A- 2009 236 606
- US-A- 5 478 921
- US-A1- 2004 254 336
- US-A1- 2005 092 679
- US-A1- 2006 228 386
- US-A1- 2010 059 452
- US-A1- 2016 017 077

## Description

### TECHNICAL FIELD

The present invention relates to a method of a phase structure of a blend polymer.

### BACKGROUND OF THE INVENTION

In developing materials for a polymer, it is important to make an image showing a polymer phase structure and a relation of compounding components of the polymer with the polymer and observe the image.

Further in recent development of materials, importance of a blend polymer is increasing in order to comply with various needs. Many of blend polymers have a phase structure comprising phases having a size of from several nanometers to several-hundred micrometers. A size and an alignment of each phase are influenced by formulation and heat history of a blend polymer and additives such as a reinforcing agent and a coloring agent contained in the polymer, and therefore, complicated and various phase structures are formed. Since the phase structure has influence on physical properties of the blend polymer, exact observation of the phase structure is an essential technique in the material development using blend polymers.

A transmission electron microscope (TEM), a scanning electron microscope (SEM), an atomic force microscope (AFM), and the like have been used so far in a method of observing a phase structure of a blend polymer as an image. Among these, AFM is excellent in a point that the AFM has a resolution equivalent to that of the TEM and there is no need of preparing ultra-thin sample slices. Furthermore, while in the case of observation using the TEM and SEM, a sample needs to be put into an evacuated state, the AFM is excellent also in a point that observation in the presence of air and in water can be made. Examples of documents explaining the method of observing a phase structure by means of the AFM include JP 2000-017091 A, JP 2009-236606 A and JP 2014-190883 A. US 2016/0017077 A1 discloses a donor-acceptor conjugated polymer. Before an AFM image of the blended polymer was taken, only the initial polymers, but not the blended polymer itself, have been purified.

### SUMMARY OF THE INVENTION

An AFM has a cantilever provided with a probe at its leading end. This probe scans a surface of a sample piece and an action of the probe is detected by the cantilever to make an image of the sample, thereby making it possible to observe a measuring surface. In the case of a sample having a strong adhesion to the probe of the AFM such as natural rubber, observation is conducted in water in order to decrease the adhesion.

Further, in the measurement by means of an AFM, it is necessary to make a smooth measuring surface on a sample surface using a microtome or the like. However, in the case where components which are apt to bleed or bloom are contained in the sample, there is a problem that the measuring surface is covered with a bleeding component or a blooming component and intended observation becomes difficult. Examples of solutions include a method of executing Soxhlet extraction using an organic solvent such as acetone as pre-treatment before the observation and a method of observation performed in water, where bleeding or blooming hardly occurs.

In the case where a bleeding component or a blooming component is hydrophobic, most of it can be removed using an organic solvent such as acetone, and therefore bleeding or blooming can be inhibited by executing extraction treatment before observation. Further, if observation in water is possible, it can inhibit bleeding and blooming of hydrophobic components. However, when a hydrophilic bleeding component or blooming component is contained in a sample, it is difficult to remove such a component with an organic solvent, and there is a problem that bleeding or blooming is accelerated during the observation in water and the observation becomes difficult.

Furthermore, even in observation with a scanning electron microscope (SEM) and an optical microscope, it is assumed that a problem with bleeding or blooming of a hydrophilic component may occur.

The present invention relates to a method of observing a phase structure of a blend polymer comprising two or more polymer components, wherein the phase structure of the blend polymer, from which the bleeding component or the blooming component has been removed by subjecting the polymer to extraction using at least one or more of amphiphatic solvents, is observed in water using an atomic force microscope.

It is preferable that the observation in the above-mentioned observation step is made by a tapping mode or a force volume mode of the atomic force microscope.

By subjecting the polymer to extraction using at least one or more of amphipathic solvents, the hydrophilic bleeding component and/or blooming component in the polymer can be removed.

According to the method of observing a phase structure of a blend polymer comprising two or more kinds of polymers, wherein the phase structure of the blend polymer, from which the bleeding component or the blooming component has been removed, is observed in water using an atomic force microscope, the observation can be made while inhibiting the bleeding or the blooming even in the case of observing a phase structure of a polymer comprising a hydrophilic bleeding component and/or blooming component with an atomic force microscope.

### BRIEF DESCRIPTION OF THE DRAWINGS

FIG. 1 is a photograph of an optical microscope of Example 1.
FIG. 2 is a photograph of an optical microscope of Comparative Example 1.
FIG. 3 shows the results of observation of Example 1 using an atomic force microscope.
FIG. 4 shows the results of observation of Comparative Example 1 using an atomic force microscope.

### DETAILED DESCRIPTION

### Method of removal

The method of removing a bleeding component and/or a blooming component in a polymer of the present invention is characterized by subjecting the polymer to extraction using at least one or more of amphipathic solvents. By subjecting the polymer to extraction using at least one or more of amphipathic solvents, a bleeding component and/or a blooming component, mainly a hydrophilic bleeding component and/or blooming component contained in the polymer can be removed. Meanwhile, in conventional extraction using an organic solvent such as acetone having low hydrophilicity, it is possible to remove a hydrophobic component in a polymer, but a hydrophilic component cannot be removed.

The extraction method is not limited particularly as far as amphipathic solvents are used. Examples of the extraction method include immersion extraction, refluxing extraction, high-speed extraction, microwave extraction, and the like. In the case of the refluxing extraction, an extractor such as a Soxhlet extractor can be used. Among the methods, the refluxing extraction method is preferred for the reason that the extraction can be conducted efficiently with a relatively small amount of a solvent since the refluxing solvent does not contain a component to be extracted, and the Soxhlet extraction method is more preferred.

An amount of the amphipathic solvent for a polymer sample is preferably 100 times the volume of the polymer sample or more, more preferably 1000 times or more from the viewpoint of a solvent amount sufficient for enabling the bleeding component and the blooming component in the polymer to be dissolved in the solvent. An upper limit of the amount of the amphipathic solvent is not limited particularly, and is preferably 5000 times the volume of an unvulcanized rubber composition or less, more preferably 3000 times or less, from the viewpoint of workability.

An extraction temperature and an extraction time can be adjusted adequately according to the extraction method and the solvent amount. For example, in the case of extraction by the Soxhlet extraction method, it is preferable to perform the extraction for 4 to 72 hours at a temperature higher by 10°C or more than a boiling point of the solvent.

The amphipathic solvents are not limited particularly as far as at least one or more of solvents being capable of invading the polymer sample and enabling the hydrophilic bleeding component and/or blooming component in the polymer sample to be dissolved therein. The amphipathic solvent is preferably a lower alcohol such as methanol or ethanol, more preferably a lower alcohol having 1 to 5 carbon atoms, and ethanol is further preferable since a property of dissolving a hydrophilic component and an extraction efficiency are satisfactory.

A blend polymer from which a bleeding component and/or a blooming component is removed is not limited particularly, and an example thereof includes a rubber composition prepared by blending various polymer components.

The polymer components are not limited particularly, and examples thereof include various polymers such as polyethylene, polypropylene, polybutadiene, polyisoprene, an ethylene-propylene copolymer, polystyrene, a styrene-butadiene copolymer, an acrylonitrile-styrene copolymer, polyvinyl chloride, polyacrylic acid, polymethacrylic acid, polyamide, polyurethane, polyethylene terephthalate, polybutylene terephthalate, polytetrafluoroethylene, polycarbonate, polysulfone and polyether sulfone; various resins such as an epoxy resin, a urethane resin and an unsaturated polyester resin; modified natural rubbers such as natural rubber (NR) and epoxidized natural rubber (ENR); and rubber components such as isoprene rubber (IR), butadiene rubber (BR), styrene-butadiene rubber (SBR), butyl rubber (IIR), brominated isobutylene-p-methylstyrene copolymer, acrylonitrile-butadiene rubber (NBR), chloroprene rubber (CR), ethylene-propylene rubber (EPM), ethylene-propylene-diene copolymer rubber (EPDM), styrene-isoprene rubber, styrene-isoprene-butadiene rubber copolymer rubber (SIBR), isoprene-butadiene rubber, chlorosulfonated polyethylene (CSM), acrylic rubber (ACM, ANM), epichlorohydrin rubber (CO, ECO, GECO), polysulfide rubber (T), silicone rubber (Q), fluorine-containing rubbers (FKM) and urethane rubber (U).

The blend polymer is a blend polymer prepared by combination use of two or more thereof. The blend polymer is preferably a blend polymer comprising two or more of incompatible polymer components, more preferably a blend polymer comprising two or more of polymer components forming a sea-island structure, from a point that a phase structure comprising different polymer components can be observed. Here, incompatibility means a state of different polymers being not mixed uniformly at a molecular level. In a blend polymer comprising a plurality of polymers being incompatible with each other, phase separation of respective polymers occurs to form a phase structure or in some case, form a sea-island structure. Examples of a combination of polymer components enabling a sea-island structure to be formed include a combination of NR and BR, a combination of NR and SBR, a combination of NR, EPDM, SBR and NBR, etc.

The above-mentioned polymer components are not limited particularly, and it is possible to appropriately blend polymer components used commonly for preparing a rubber composition and the like, for example, fillers such as carbon black and silica, zinc oxide, stearic acid, a processing aid, an antioxidant, oil, wax, sulfur, a vulcanization accelerator, and the like.

While it does not matter whether the blend polymer is vulcanized or not, a vulcanized rubber composition is preferred. The vulcanized rubber composition comprises the above-mentioned rubber component as a polymer component and can be prepared by a crosslinking reaction. An unvulcanized rubber composition may dissolve depending on kinds of a polymer component and a solvent.

For a reason that the bleeding and the blooming can be inhibited more surely, it is preferable to remove the hydrophobic bleeding component and blooming component being present in the blend polymer by conducting the extraction with an organic solvent such as acetone before or after carrying out the method of removal of the present invention.

Examples of the organic solvent being usable for removing hydrophobic components include acetone, toluene, THF, cyclohexane, dimethyl sulfoxide, chloroform, and the like. Among these, acetone is preferred from the viewpoint of a handling property.

### Observation method

In the case of the polymer subjected to the treatment by the method of removing a bleeding component and/or a blooming component of the present invention, bleeding and blooming of the hydrophilic components are inhibited not only in the atmosphere but also in water, and a measuring surface is not covered with a bleeding component or a blooming component. Therefore, it is preferable to use the polymer as a sample for surface observation. The observation method is using an atomic force microscope (AFM). Since a sample having a strong adhesive force to a probe of the AFM is observed satisfactory in water for decreasing the adhesive force, a method of observing a phase structure in water by the AFM is used.

A shape and a size of a sample piece to be used for the observation by the AFM are not limited particularly as far as the sample piece can be placed on a sample stage of the AFM. For formation of a polymer sample, a knife, scissors, razor, cryomicrotome, or the like can be used appropriately. From the viewpoint that a smooth surface suitable for observation by the AFM is formed, use of cryomicrotome is preferable.

The AFM has a cantilever provided with a probe at its end, and this probe scans a surface of a sample piece and an action of the probe is detected with the cantilever. The action of the probe detected by the cantilever is visualized to obtain an AFM image. In the AFM, a three-dimensional shape of the sample piece surface, and mechanical properties of the sample piece such as a surface hardness and a friction force can be measured. Examples of an AFM usable in the observation method of the present invention include MultiMode 8 available from Bruker AXS, E-sweep available from Hitachi High-Tech Science Corporation, etc. The measuring conditions of the AFM can be selected appropriately according to kinds and surface conditions of sample pieces. Probes made of tungsten, iridium, silicon nitride, and the like can be used.

The observation with the AFM in the present invention is made by a proper measuring mode provided on the AFM. The proper measuring mode can be appropriately selected according to kinds of polymer components contained in the polymer sample and surface conditions of a sample piece to be subjected to observation with the AFM. Examples of the typical measuring mode of the AFM include a contact mode, a tapping mode, and a non-contact mode. A force modulation mode being capable of measuring a hardness of a micro-region on a surface of a sample piece or a force volume mode being capable of measuring distributions of Young modulus and a modulus of elasticity may be selected. Preferred measuring modes are a tapping mode giving a short contact time of a probe with a sample piece and being suitable for measurement of a soft sample piece and a force volume mode enabling a difference in a mechanical property of a micro-region of a sample piece to be visualized into an image.

According to the method of observing a phase structure of the present invention, by observing a phase structure of a polymer comprising a hydrophilic bleeding component and/or blooming component in water with an atomic force microscope, the observation can be made while inhibiting the bleeding or the blooming.

### EXAMPLE

The present invention is explained by means of Example, but is not limited to the example.

Various chemicals used in Example and Comparative Example are collectively shown below.
NR: TSR20
Silica: ZEOSIL 115GR available from Rhodia Japan Kabushiki Kaisha
(N₂SA: 110 m²/g, average primary particle size: 20 nm)
Silane coupling agent: Si69 available from Evonik Degussa GmbH (comprising bis(3-triethoxysilylpropyl)tetrasulfide as a main component)
Oil: PROCESS X-140 available from JX Nippon Oil & Energy Corporation
Zinc oxide: GINREI R available from TOHO ZINC CO., LTD.
Stearic acid: Stearic acid "Tsubaki" available from NOF CORPORATION Wax: OZOACE 0355 available from Nippon Seiro Co., Ltd.
Antioxidant: NOCRAC 6C (N-(1,3-dimethylbutyl)-N'-phenyl-p-phenylenediamine) available from Ouchi Shinko Chemical Industrial Co., Ltd.
Powdered Sulfur (comprising 5% oil): 5% oil-treated powdered sulfur (soluble sulfur comprising 5% by mass of oil) available from Tsurumi Chemical Industry Co., Ltd.
Vulcanization accelerator: NOCCELER NS (N-tert-butyl-2-benzothiazylsulfenamide) available from Ouchi Shinko Chemical Industrial Co., Ltd.

### Preparation of vulcanized rubber composition

A rubber component, an antioxidant, stearic acid and zinc oxide were poured into a 1.7-liter Banbury mixer available from Kobe Steel, Ltd. according to the compounding formulation shown in Table 1 to give a filling percentage of 58%, followed by kneading at 80 rpm until a temperature reached 140°C. To the obtained kneaded product were added sulfur and the vulcanization accelerator in amounts shown in Table 1, followed by further kneading to obtain an unvulcanized rubber composition. The obtained unvulcanized rubber composition was molded and subjected to vulcanization at 160°C for 20 minutes to obtain each vulcanized rubber composition.

### Extraction treatment

500 mg of the vulcanized rubber composition was subjected to Soxhlet extraction treatment at 90°C for 48 hours with 100 ml of ethanol to obtain an extracted product of Example 1, and 500 mg of the vulcanized rubber composition was subjected to Soxhlet extraction treatment at 70°C for 48 hours with 100 ml of acetone to obtain an extracted product of Comparative Example 1.

### Observation with an AFM and evaluations of bleeding and blooming

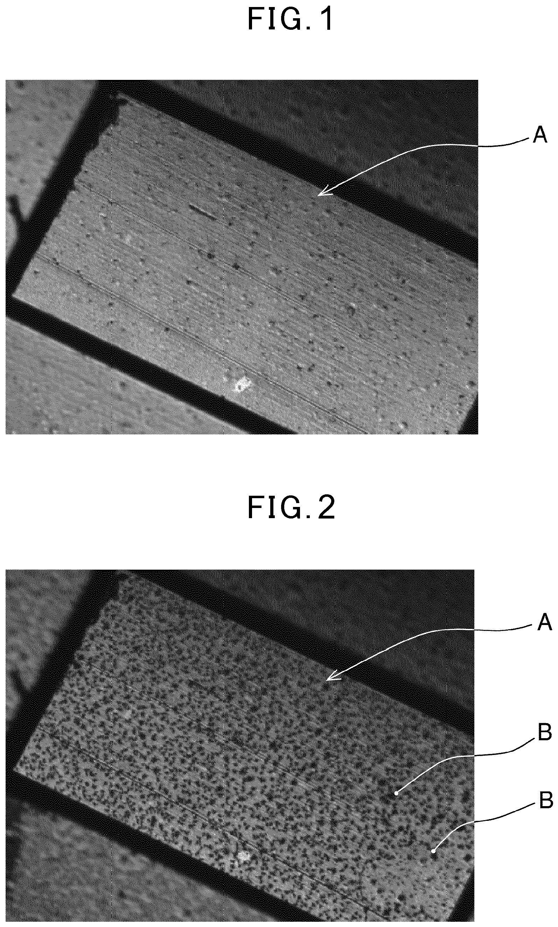

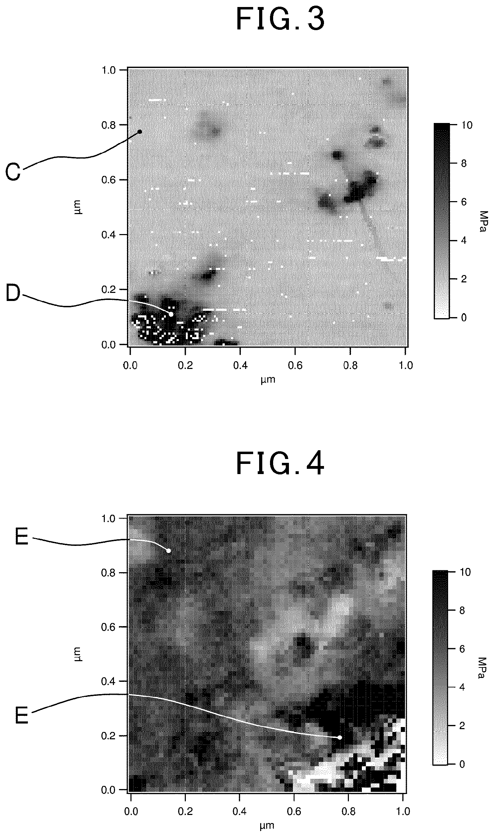

Each of extracted products was cut with a razor into small pieces which were cut with cryomicrotome to form a smooth surface. The formed smooth surface was observed with an AFM (MultiMode 8 available from Bruker AXS, force volume mode, in water, cantilever: 40 N/m (a rate of spring), frequency: 5 Hz, a measuring range: 1µm × 1 µm). Further, after the observation with the AFM, water was removed from the smooth surface and the smooth surface was observed with an optical microscope (BX 63 available from OLYMPUS). The results of the observation with the optical microscope are shown in Figs. 1 and 2, and the results of the AFM observation are shown in Figs. 3 and 4.

**Table 1**

| | Example 1 | Com. Ex. 1 |
|---|---|---|
| Compounding amount (part by mass) | | |
| NR | 100 | 100 |
| Silica | 10 | 10 |
| Silane coupling agent | 1 | 1 |
| Oil | 3 | 3 |
| Zinc oxide | 3 | 3 |
| Stearic acid | 2 | 2 |
| Wax | 1 | 1 |
| Antioxidant | 2 | 2 |
| Sulfur | 2 | 2 |
| Vulcanization accelerator 1 | 1 | 1 |
| Extraction treatment | Extraction with ethanol | Extraction with acetone |

In Example 1, in which the removal of the bleeding component and/or the blooming component was performed (Fig. 1), it is seen that as a result of removal of a hydrophilic bleeding component and blooming component from the polymer, neither a bleeding component nor a blooming component was present on the smooth surface (A) irrespective of completion of the AFM observation in an underwater environment. Meanwhile, in Comparative Example 1, in which only the extraction with acetone was performed, the smooth surface (Fig. 2) was covered substantially with the bleeding component or the blooming component (B).

Further, in the result (Fig. 3) of the AFM observation of Example 1, in which the removal was performed, silica (D) scattering in the rubber component phase (C) showing an elastic modulus of around 2 to 3 MPa could be observed clearly. Meanwhile, in the result (Fig. 4) of the AFM observation of Comparative Example 1, in which only the extraction with acetone was performed, it is seen that the observation result is so unnatural that almost no phase representing the rubber component phase having an elastic modulus of around 2 to 3 MPa can be confirmed. Further, it is conjectured that the rubber component phase cannot be observed due to the influence of the bleeding component (E) observed in Fig. 2.

### Explanation of symbols

- A: Smooth surface
- B: Bleeding component or blooming component
- C: Rubber component phase
- D: Silica
- E: Bleeding component

## Claims

1. A method of observing a phase structure of a blend polymer comprising two or more polymer components, wherein the phase structure of the blend polymer, from which the bleeding component or the blooming component has been removed by subjecting the polymer to extraction using at least one or more of amphipathic solvents, is observed in water using an atomic force microscope.

2. The method of observing a phase structure of claim 1, wherein the observation in the observation step is made by a tapping mode or a force volume mode of the atomic force microscope.

## Patentansprüche

1. Verfahren zum Beobachten einer Phasenstruktur einer Polymermischung umfassend zwei oder mehrere Polymerkomponenten, wobei die Phasenstruktur der Polymermischung, von welcher die blutende Komponente oder die blühende Komponente durch Unterwerfen des Polymers der Extraktion unter Verwendung zumindest eines oder mehreren amphipathischen Lösungsmitteln entfernt wurde, wird in Wasser unter Verwendung eines Rasterkraftmikroskops beobachtet.

2. Verfahren zum Beobachten einer Phasenstruktur nach Anspruch 1, wobei die Beobachtung in dem Beobachtungsschritt mit einem Tapping-Modus oder einem Force-Volume-Modus des Rasterkraftmikroskops durchgeführt wird.

## Revendications

1. Procédé d'observation d'une structure de phase d'un polymère en mélange comprenant deux ou plus de deux composants polymères, dans lequel la structure de phase du polymère en mélange, dont le composant de dégorgement ou le composant d'éblouissement a été retiré par soumission du polymère à une extraction utilisant au moins un ou plusieurs solvants amphipathiques, est observée dans de l'eau par utilisation d'un microscope à force atomique.

2. Procédé d'observation d'une structure de phase selon la revendication 1, dans lequel l'observation lors de l'étape d'observation est effectuée par un mode de tassement ou un mode de volume forcé du microscope à force atomique.
